# EUROPÄISCHE PATENTANMELDUNG

(11) **EP 4 445 730 A1**
(43) Veröffentlichungstag der Anmeldung: **16.10.2024**
(21) Anmeldenummer: 24164111.7
(22) Anmeldetag: 18.03.2024
(51) Int. Cl.: A01M 29/34, A45F 3/52, A47C 29/00, E06B 9/52, D03D 15/292, D03D 15/47, D03D 15/573, D01F 8/14, D03D 15/587, B60P 3/38

(54) **TEXTILE GITTERARTIGE STRUKTUR ZUR ABWEHR VON INSEKTEN**

(30) Priorität: 11.04.2023 DE 102023109089
(71) Anmelder: Gebrüder Aurich GmbH, 42477 Radevormwald (DE)
(72) Erfinder: Aurich, Matthias, 42477 Radevormwald (DE)
(74) Vertreter: Ostriga Sonnet Wirths & Vorwerk

(57) **Zusammenfassung**

Die Patentanmeldung betrifft eine textile gitterartige Struktur zur Abwehr von Insekten aus Polymerfäden mit definierten Öffnungen zum Luftdurchtritt, wodurch die Polymerfäden aus zwei Polymeren mit voneinander abweichenden Schmelztemperaturen gebildet werden.

Die Aufgabe der Erfindung besteht darin, eine neue textile gitterartige Struktur zu schaffen, welches zu hochwertigen Insektenschutznetzen verarbeitbar ist und eine ausreichende Steifigkeit und Rückstellkraft bietet.

Die Lösung dieser Aufgabe besteht darin, dass die Polymerfäden aus zwei Polymeren mit voneinander abweichenden Schmelztemperaturen gebildet werden.

## Beschreibung

Die Erfindung betrifft zunächst eine textile gitterartige Struktur zur Abwehr von Insekten aus Polymerfäden mit definierten Öffnungen zum Luftdurchtritt.

Derartige Insektenschutznetze werden in Wohnmobilen und Privathaushalte als Tür- und Fensterschutz verbaut. Dies geschieht beispielsweise für Fliegengittertüren oder durch in Falten gelegten (plissierten) Fliegenschutz, der eine gewisse Steifigkeit und auch eine gewisse Rückstellkraft aufweisen muss.

Beim Stand der Technik werden diese textilen gitterartigen Strukturen aus Polymerfasern hergestellt (Gewebe oder Gewirk) und dann gewaschen. Als nächstes findet eine Vorfixierung bei ca. 150°C statt, wodurch der sogenannte Thermoschrumpf beim nachfolgenden Färben deutlich reduziert wird. Letztlich wird beim Stand der Technik eine Melaminharzflüssigkeit zum Zwecke des Fixierens aufgetragen, dann eine Erhitzung auf 190°C durchgeführt, wodurch die Flüssigkeitskomponente verdampft und das Gewebe beziehungsweise das Gewirk vollständig vom Melaminharz umgeben ist, so dass die gewünschte Steifigkeit und Rückstellkraft der textilen Struktur vorhanden ist.

Nachteiligerweise weist jedoch Melaminharz Formaldehyd auf, welches als krebserregender Stoff bekannt ist. Auch benötigt das Melaminharz zur Aushärtung nicht nur hohe Temperaturen (ca. 190°C), sondern auch einen hohen Gesamtenergiebedarf durch Verdampfen des Flüssigkeitsanteils. Auch sind die mit dem Melaminharz in Kontakt kommenden Maschinen nur schwer und aufwendig zu reinigen.

Letztlich handelt es sich bei der textilen Struktur nach dem Stand der Technik darüber hinaus auf nachteiliger Weise um kein sortenreines Textil, was für die Recyclingfähigkeit problematisch ist.

Die Aufgabe der Erfindung besteht nun darin, eine neue textile gitterartige Struktur zu schaffen, welches zu hochwertigen Insektenschutznetzen verarbeitbar ist und die oben genannten Nachteile nicht aufweist, jedoch eine ausreichende Steifigkeit und Rückstellkraft bietet.

Die Lösung der Aufgabe ergibt sich aus den Merkmalen des nachfolgenden Anspruchs 1:
Textile gitterartige Struktur zur Abwehr von Insekten aus Polymerfäden mit definierten Öffnungen zum Luftdurchtritt, dadurch gekennzeichnet, dass die Polymerfäden aus zwei Polymeren mit voneinander abweichenden Schmelztemperaturen gebildet werden.

Die erfindungsgemäße textile gitterartige Struktur zur Abwehr von Insekten hat den wesentlichen Vorteil, dass sie sortenrein lediglich aus Polyester besteht und eine geringere Energie zur Herstellung benötigt. Darüber hinaus ist die textile gitterartige Struktur ohne Melaminharz herstellbar, sodass sie keine Rückstände von Formaldehyd aufweist.

Vorzugsweise kann es sich dabei um eine textile Struktur handeln, die aus multifilen Polyesterfäden gebildet wird, wobei die Filamente voneinander abweichende Schmelztemperaturen aufweisen.

Beim konkreten Ausführungsbeispiel weisen die multifilen Polyesterfäden eine Vielzahl von Filamenten, vorzugsweise 24 bis 36 Filamente, auf, welche zu 70% aus Polyester mit einer normalen Schmelztemperatur und zu 30% aus Polyester mit einer niedrigen Schmelztemperatur bestehen.

Auf vorteilhafte Weise kann dann bei relativ niedrigen Schmelztemperaturen von 140-150°C der 30%-Anteil aus Polyester mit einer niedrigen Schmelztemperatur aufgeschmolzen werden, so dass dieser dann einen Polyesterfilm über die gesamte Oberfläche der textilen Struktur bildet, wodurch die vorteilhafte und notwendige Steifigkeit und Rückstellkraft des erfindungsgemäßen Produktes erreicht wird.

Grundsätzlich ist auch möglich, dass die textile Struktur durch unterschiedliche Polymerfäden mit voneinander abweichenden Schmelztemperaturen gebildet wird.

Bei einer vorteilhaften Ausführungsform der Erfindung weist die textile Struktur Polyesterfäden auf mit einer normalen Schmelztemperatur von circa 255°C und Polyesterfäden mit einer niedrigen Schmelztemperatur zwischen 140 und 150°C.

Weitere Vorteile der Erfindung ergeben sich aus den nachfolgenden Unteransprüchen 6 und 7.

Des Weiteren betrifft die Erfindung auch ein Verfahren zur Herstellung einer textilen gitterartigen Struktur aus Polymerfäden aus zwei Polymeren mit voneinander abweichenden Schmelztemperaturen.

Ausgehend von dem oben genannten Stand der Technik und der ebenfalls oben dargelegten Aufgabe ergibt sich die Lösung dieser Aufgabe aus dem Verfahrensanspruch 8:
Verfahren zur Herstellung einer textilen gitterartigen Struktur aus Polymerfäden aus zwei Polymeren mit voneinander abweichenden Schmelztemperaturen, gekennzeichnet durch folgende Verfahrensschritte:
- Herstellung der textilen Struktur;
- Fixieren der textilen Struktur bei einer Temperatur, die oberhalb der Schmelztemperatur des niedriger schmelzenden Polyesteranteils und unterhalb des normalschmelzenden Anteils liegt, wodurch die niedrig schmelzenden Polymerfäden aufschmelzen und die textile Struktur von einem Polyesterfilm überzogen wird, wodurch die textile Struktur eine gewisse Steifigkeit und Rückstellkraft erhält.

Das erfindungsgemäße Verfahren hat die wesentlichen Vorteile, dass die sortenreine textile Struktur kein Formaldehyd aufweist, zur Herstellung wesentlich weniger Energie benötigt und letztlich deutlich besser zu recyceln ist.

Weitere Vorteil der Erfindung ergeben sich aus der nachfolgenden Beschreibung des Verfahrens zur Herstellung der textilen gitterartigen Struktur. Es zeigen:
- Figur 1: schematische Darstellung der Herstellung der textilen gitterartigen Struktur als Rohgewirk,
- Figur 2: Darstellung des Waschprozesses des Rohgewirks,
- Figur 3: Darstellung der Vorfixierung des Rohgewirks,
- Figur 4: Darstellung der Färbung des Rohgewirks,
- Figur 5: Darstellung der Fixierung des Rohgewirks.

In den Zeichnungen ist eine textile gitterartige Struktur in Form eines fertigen als Insektennetz einsetzbaren Gewirks mit der Bezugsziffer 10 bezeichnet.

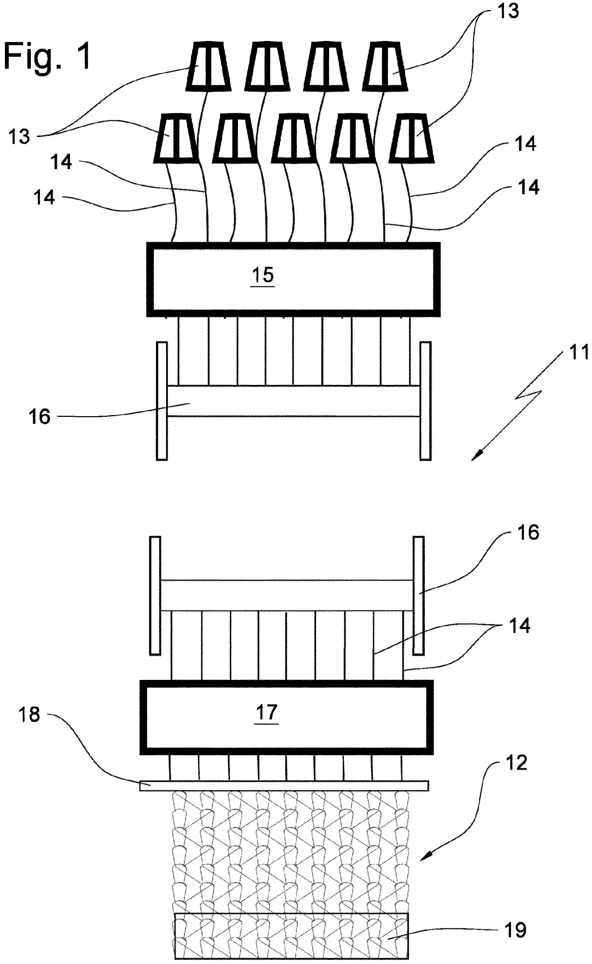

Die Herstellung eines derartigen textilen gitterartigen Gewirks 10 ist in den nachfolgend beschriebenen Figuren 1-5 dargestellt.

In der Figur 1 ist eine Vorrichtung 11 zur Herstellung eines Rohgewirks 12 zu erkennen.

In einem ersten Schritt werden zahlreiche Fadenrollen 13, auf denen jeweils ein multifiler Polyesterfaden 14 aus normal schmelzenden Filamenten und aus niedrig schmelzenden Filamenten, gespeichert. Eine Vielzahl von Polyesterfäden 14 werden über eine Schärmaschine 15 geführt und auf einen Kettbaum 16 aufgewickelt.

In einem zweiten Schritt wird aus den auf dem Kettbaum 16 gespeicherten multifilen Polyesterfäden 14 in einer Wirkmaschine 17 unter Einwirkung von Legeschienen 18 das Rohgewirk 12 gewirkt und letztlich auf einer Rolle 19 aufgewickelt.

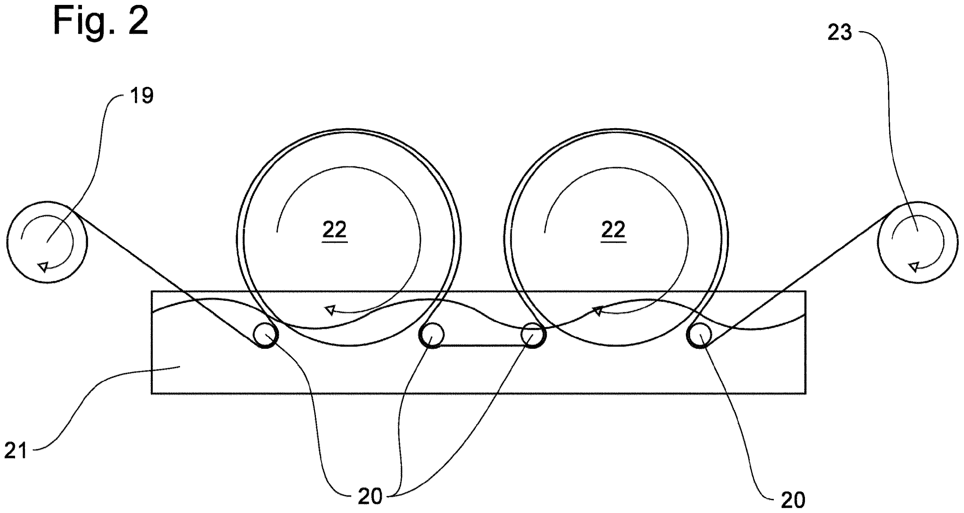

In der Figur 2 ist der Waschprozess des Rohgewirks 12 dargestellt. Hierbei wird das Rohgewirk 12 von der Rolle 19 über Umlenkrollen 20 durch ein Wasserbad 21 und über Waschtrommeln 22 geführt, so dass auf der Oberfläche haftende Fette oder sonstige Verunreinigungen entfernt werden. Danach wird das gewaschene Rohgewirk 12 auf einer Rolle 23 aufgerollt. Das Rohgewirk 12 wird bei der Vorfixierung jedoch lediglich auf eine Temperatur unterhalb der niedrigen Schmelztemperatur der Polymerfäden 14 erwärmt.

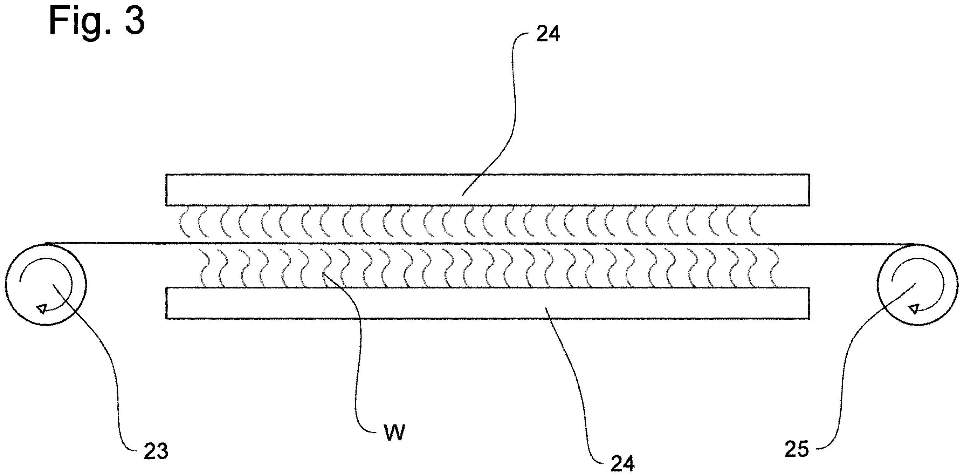

Die Vorfixierung des auf der Rolle 23 gespeicherten gewaschenen Rohgewirk 12 ist in der Figur 3 dargestellt. Hierbei durchläuft das gewaschene Rohgewirk 12 einen Spannrahmen 24 und wird unter Wärmeeinwirkung gestreckt und auf eine Rolle 25 aufgerollt.

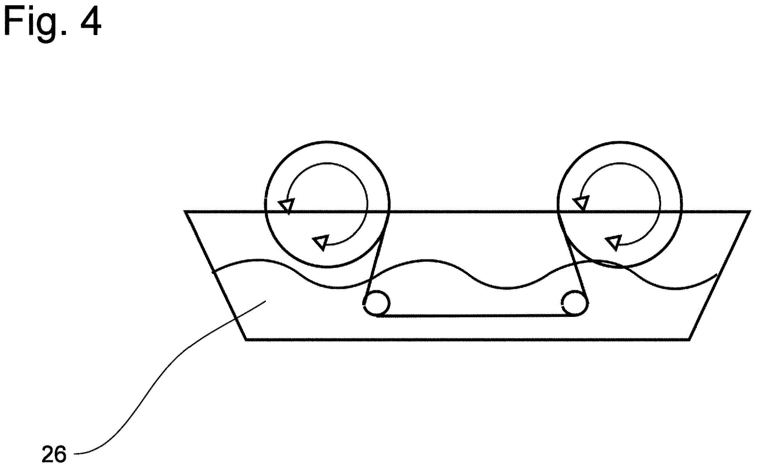

In der Figur 4 ist in schematisierter Form der Färbeprozess dargestellt. Hierbei durchläuft das auf der Rolle 25 gespeicherte Material ein Färbebad 26. Falls bei der Herstellung des Rohgewirks 12 bereits gefärbte Polyesterfäden 14 verwendet werden, entfällt der Färbeprozess.

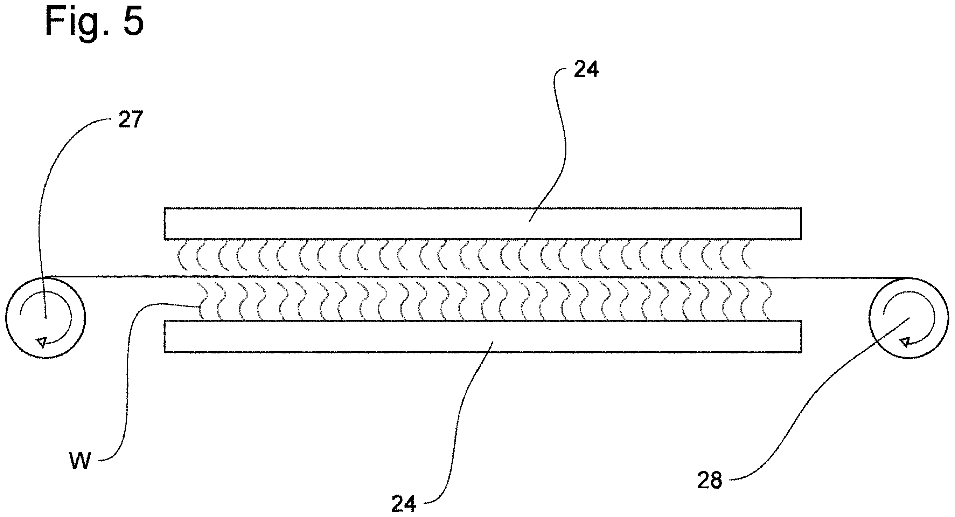

Letztlich wird, wie in Figur 5 dargestellt, das auf der Rolle 27 gespeicherte gefärbte Gewirk 12 wiederum durch einen Spannrahmen 24 geführt und so stark gewärmt (Wärmeeinwirkung W), dass die niedrig schmelzende Komponente des Bi-Komponentenpolyesterfadens so aufschmilzt, dass die gesamte textile gitterartige Struktur 10 davon überzogen wird.

Nach dem Abkühlen wird das nun fertig ausgerüstete Gewirk 12 letztlich auf eine Rolle 28 aufgerollt und kann dem Herstellungsprozess eines Fliegengitters oder in Falten gelegten Fliegenvorhangs zugeführt werden.

Aufgrund des letzten Verarbeitungsschrittes weist die textile gitterartige Struktur 10 eine ausreichende Steifigkeit sowie ein entsprechend gutes Rückstellvermögen auf.

### Bezugszeichenliste

- 10: textile gitterartige Struktur
- 11: Vorrichtung
- 12: Rohgewirk
- 13: Fadenrollen
- 14: Fäden
- 15: Schärmaschine
- 16: Kettbaum
- 17: Wirkmaschine
- 18: Legeschienen
- 19: Rolle
- 20: Umlenkrollen
- 21: Wasserbad
- 22: Wassertrommel
- 23: Rolle
- 24: Spannrahmen
- 25: Rolle
- 26: Färbebad
- 27: Rolle
- 28: Rolle

- W: Wärmeeinwirkung

## Patentansprüche

1. Textile gitterartige Struktur (10) zur Abwehr von Insekten aus Polymerfäden (14) mit definierten Öffnungen zum Luftdurchtritt, **dadurch gekennzeichnet, dass** die Polymerfäden (14) aus zwei Polymeren mit voneinander abweichenden Schmelztemperaturen gebildet werden.

2. Textile Struktur nach Anspruch 1, **dadurch gekennzeichnet, dass** es sich bei den Polymerfäden (14) um multifile Polyesterfäden handelt, die Filamente mit voneinander abweichenden Schmelztemperaturen aufweisen.

3. Textile Struktur nach einem der vorangehenden Ansprüche, **dadurch gekennzeichnet, dass** die multifilen Polyesterfäden (14) aus einer Vielzahl von Filamenten, vorzugsweise aus 24 bis 36 Filamenten, gebildet sind, welche zu 70% aus Polyester mit einer normalen Schmelztemperatur und zu 30% aus Polyester mit einer niedrigeren Schmelztemperatur bestehen

4. Textile Struktur nach einem der vorangehenden Ansprüche, **gekennzeichnet durch** unterschiedliche Polymerfäden (14) mit voneinander abweichenden Schmelztemperaturen.

5. Textile Struktur nach einem der vorangehenden Ansprüche, **dadurch gekennzeichnet, dass** die normale Schmelztemperatur ca. 255°C und die niedrigere Schmelztemperatur 140 - 150 °C beträgt.

6. Textile Struktur nach einem der vorangehenden Ansprüche, **dadurch gekennzeichnet, dass** die textile Struktur (10) als Gewebe ausgebildet ist.

7. Textile Struktur nach einem der vorangehenden Ansprüche, **dadurch gekennzeichnet, dass** die textile Struktur (10) als Gewirk (12) ausgebildet ist.

8. Verfahren zur Herstellung einer textilen gitterartigen Struktur aus Polymerfäden aus zwei Polymeren mit voneinander abweichenden Schmelztemperaturen, **gekennzeichnet durch** folgende Verfahrensschritte:
- Herstellung der textilen Struktur;
- Fixieren der textilen Struktur bei einer Temperatur, die oberhalb der Schmelztemperatur des niedriger schmelzenden Polyesteranteils und unterhalb des normalschmelzenden Anteils liegt, wodurch die niedrig schmelzenden Polymerfäden aufschmelzen und die textile Struktur von einem Polyesterfilm überzogen wird, wodurch die textile Struktur eine gewisse Steifigkeit und Rückstellkraft erhält.
